(19) **Europäisches Patentamt European Patent Office Office européen des brevets**

(11) **EP 4 017 012 A1**

(12) **EUROPEAN PATENT APPLICATION**

(43) Date of publication:
**22.06.2022   Bulletin 2022/25**

(21) Application number: **20214381.4**

(22) Date of filing: **15.12.2020**

(51) International Patent Classification (IPC):
**H04N 21/2187** (2011.01)    **H04N 21/2343** (2011.01)
**H04N 21/24** (2011.01)    **H04N 21/43** (2011.01)
**H04N 21/472** (2011.01)

(52) Cooperative Patent Classification (CPC):
**H04N 21/23439; H04N 21/2187; H04N 21/2408;
H04N 21/4305; H04N 21/472**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **THEO Technologies
3001 Leuven (BE)**

(72) Inventors:
• **VOUNCKX, Johan
  3210 Linden (BE)**
• **SPEELMANS, Pieter-Jan
  3290 Diest (BE)**

(74) Representative: **IP HILLS NV
Hubert Frère-Orbanlaan 329
9000 Gent (BE)**

(54) **LOW LATENCY LIVE VIDEO STREAMING**

(57)    Example embodiments describe a method for retrieving, by a media player, a live stream from a content distribution network, CDN, having an origin server and at least one caching server. The method comprises: i) time synchronizing (220) the media player with an origin server of the CDN; ii) determining (230) a select time (231) in the live stream; iii) deriving (240) therefrom a unique identifier (241) for a select initialization video packet (252) from a temporal independent version of the live stream having independent video packets with respective independent frames; iv) retrieving (250), by a first request (251) comprising the unique identifier, the select video packet from the CDN; and v) retrieving (260), by a second request (261), subsequent video packets (263) from a temporal dependent version of the live stream having dependent video packets with respective dependent frames.

Fig. 2

**Description**

**Technical Field**

Various example embodiments relate to, amongst other, the retrieval, by a media player, of a live stream from a content distribution network, CDN.

**Background**

Video streaming is immensely popular nowadays. It allows viewers to start watching video content without the need to completely download the content beforehand. A large portion of the Internet traffic consists of such video streamed from video services to clients, typically from a content distribution network, a CDN, to a video player application running on a PC, a tablet, a smartphone, a set-up box, a TV etc. In video streaming, the video is further delivered on demand or on request of the client. From a technology point of view, this differentiates video streaming as a request- or pull-based unicast technology from traditional broadcasting technology which is a push-based technology.

Live video streaming is a form of video streaming wherein the client retrieves the video content from the CDN while it comes available for streaming on the origin server in the CDN. This is typically used for streaming live footage or when a content provider releases content from a certain point in time onwards.

One available streaming technology that supports live streaming is chunked or segmented streaming. The media is then divided in smaller chunks or segments which are downloaded and played by the client one after the other. Such protocols may also offer adaptive bitrate streaming allowing the client to switch between different bit rates, resolutions or codecs depending on the available resources. To achieve this, different versions of the streams, each with a different bit rate, resolution or codec, are made available on the CDN. Information on the different representations and their segmenting is then available by means of a manifest file that is updated regularly. Examples of such streaming protocols are HTTP Adaptive Streaming, HAS, protocols are MPEG-DASH published as ISO/IEC 23009-1:2012, HTTP Dynamic Streaming by Adobe, HTTP Live Streaming (HLS) by Apple and Smooth Streaming, a Microsoft IIS Media Services extension.

To initiate the playback of a live stream, the client needs to identify the most recent segment or chunk from the manifest file. This is typically facilitated by the service provider by updating the manifest file each time a new segment is available within the live stream. Ideally, the manifest file is thus updated throughout the CDN at the frequency of the segment which is typically in the order of seconds. This way, upon retrieval of the manifest file, the client can retrieve the most recent segment or chunk and, hence, play the live stream with the smallest delay.

Another available streaming technology is disclosed in EP3515075A1 wherein a video stream is made available in an independent version and one or more dependent versions. The independent version then provides a stream of temporal independent video packets each having one or a few video frames. Such an independent video packet is decodable on its own, i.e. has no temporal dependencies on other video packets. A dependent version then provides a compressed stream that can have either dependent or independent video packets. When starting a video stream the client first retrieves, by a first request, a first video packet from the independent version to build up the image in the video player and then retrieves the subsequent video packets by a second request from an available dependent version. To initiate the playback of a live stream with this streaming technology, the client can start the playback at the most recent independent video packet and then continue with the subsequent video packets. Due to its small size of one or a few frames, a very short delay between showtime, i.e. the time when a frame becomes available, and playtime, i.e. when the frame is displayed to the viewer, can be achieved. To identify the most recent video packets in the live stream, a manifest file can be provided that contains information on the different versions and identifies the independent and dependent video packets.

A problem with this solution is that the manifest file can no longer profit from the caching within the CDN because its refresh rate is in the order of the frame rate, i.e. in the order of tens of milliseconds. Another solution is to make a static link to the most recent video packet, e.g. by a specific static URL, and to update the video packet itself each time upon availability of a new video packet. However, this may result in problems within the CDN because the caching servers typically cache objects based on their reference or URL. As a result, the most recent independent video packet would almost always be retrieved form the origin server which is undesirable.

**Summary**

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object of embodiments of the invention to alleviate the above identified problems.

This object is achieved, according to a first example aspect of the present disclosure, by a computer-implemented method for retrieving, by a media player, a live stream from a content distribution network, CDN, having an origin server and at least one caching server, the method comprising the following steps:

- time synchronizing the media player with an origin server of the CDN;
- determining a select time in the live stream;
- deriving therefrom a unique identifier for a select initialization video packet from a temporal independent version of the live stream having independent video packets;
- retrieving, by a first request comprising the unique identifier, the select initialization video packet from the CDN; and
- retrieving, by a second request, subsequent video packets from a temporal dependent version of the live stream having dependent video packets with respective dependent frames.

In other words, the media player starts the playback of the live stream by first identifying a select video packet from the temporal independent version of the live stream. These video packets can be retrieved by a unique identifier. This unique identifier is further derivable from the showtime of the respective video packet in the live stream. By the time synchronizing step, the media player obtains the correct reference for determining the selected showtime and thus the correct unique identifier. After or during the playback of the initialization video packet, the media player retrieves the subsequent video packets from the dependent version. It is thus an advantage that the media player retrieves a select video packet from the live stream without needing a manifest file or at least a most recent version of the manifest file. Further, as the initialization video packets are based on static unique identifiers, these packets will be efficiently cached throughout the CDN. Further, by the time synchronization step, the media player will not retrieve initialization video packets that are not yet available on the origin server. As a result, the media player can exactly retrieve the most recent independent video packet or, more general, a select independent video packet, i.e. at a select moment in time within the showtime of the live stream.

The unique identifier may for example correspond to a sequence number of a frame, e.g. the frame number of the independent frame contained in the initialization video packet. The sequence number can then be derived based on the frame rate and a known reference position within the stream.

The second request may for further be performed by a byte range request which starts at a byte location of the first subsequent video packet in the temporal dependent version. This further results in an optimal caching of the dependent frames as the caching servers can serve these frames from a single cached file

According to an embodiment, the time synchronizing comprises adjusting an internal clock of the media player by polling a time synchronization server according to a time synchronization protocol such as the Network Time Protocol, NTP. This way, both the origin server and the media player will use the same absolute time reference and the media player's time reference will correspond to the origin's server time reference.

According to another embodiment, the time synchronizing comprises:

- requesting a file from the CDN; and
- receiving a response from the CDN with the file and containing a time reference with respect to the time on the origin server;

and wherein the determining of the select time in the live stream is further based on the received time reference.

The time reference may for example corresponds to a lifetime of the file in the CDN and/or to a current time on the origin server (101) when the response is sent to the media player.

A caching server typically keeps track of the lifetime of the cached files, i.e. how long the file has been cached in the CDN. These lifetimes are then sent together with the file to the client. Upon retrieval of such file, the media player can thus derive when the file was retrieved from the origin server further and link it with the state of the live stream at the time of the retrieval.

Such file lifetime is for example supported for requests according to the HTTP protocol in which the lifetime may be specified in the HTTP age header field. Alternatively, the lifetime could also be specified by other attributes provided by the HTTP protocol. Therefore, when the CDN operates according to the HTTP protocol, the synchronization can be performed by standard HTTP protocol features.

According to a further embodiment, the HTTP age header specifies the lifetime with sub-second accuracy, e.g. in milliseconds. Currently, the HTTP/1.1 protocol still specifies the lifetime in seconds. By changing the accuracy to sub-second accuracy, the time synchronization may be performed in the order of the frame duration of a video stream, e.g. in the order of 10 to 40 milliseconds.

According to an embodiment, the method further comprises obtaining a manifest file containing information for retrieving the live stream from the CDN. The determining of the current time and/or deriving the identifier in the live stream is then further based on the information in the manifest file.

A manifest file may be used for obtaining information on the live stream, for example on the location and properties of the independent and dependent versions. This manifest file may then further be used to derive the identifier in the live stream, e.g. by providing an association between sequence numbers and their time within the live stream. Further, the lifetime of the manifest file may also be used to perform the synchronization.

According to a second example aspect, the disclosure relates to a media client configured for retrieving a live stream from a content distribution network, CDN, having an origin server and at least one caching server, and further configured to:

- time synchronizing the media player with an origin server of the CDN;
- determining a select time in the live stream;
- deriving therefrom a unique identifier for a select initialization video packet from a temporal independent version of the live stream having independent video packets with respective independent frames;
- retrieving, by a first request comprising the unique identifier, the select initialization video packet from the CDN; and
- retrieving, by a second request, subsequent video packets from a temporal dependent version of the live stream having dependent video packets with respective dependent frames.

According to a third example aspect, the disclosure relates to a computer program product comprising computer-executable instructions for causing an apparatus to perform at least the method according to the first example aspect.

According to a fourth example aspect, the disclosure relates to a computer readable storage medium comprising computer-executable instructions for performing the method according to the first example aspect when the program is run on a computer.

According to a fifth example aspect, the disclosure also relates to a computer-implemented method for retrieving, by a client, an object from a content distribution network, CDN, having an origin server and at least one caching server; wherein the respective objects are time-related and addressable by respective time-related identifiers comprising:

- requesting a first object from the CDN;
- receiving a response from the CDN with the first object and containing a time reference with respect to the time on the origin server; and
- time-synchronizing based on the time reference the client with the origin server;
- determining a time-related identifier for a select moment in time;
- retrieving the object from the CDN by the time-related identifier.

Advantageously, the time reference comprises a lifetime of the file in the CDN.

A caching server typically keeps track of the lifetime of the cached object such as files, i.e. how long the object has been cached on the caching server. These lifetimes are then sent together with the object when retrieved by a client or other caching server. Upon retrieval of the first object, the client can thus derive when the first object was retrieved from the origin server and further use it for deriving a time-reference with the origin server, i.e. for performing a time synchronization with the origin server. By this time synchronization, the client can further derive a time-related identifier of an object which is served by the CDN.

Such object lifetime is for example supported for requests performed according to the HTTP protocol in which the lifetime may be specified in the HTTP age header field. Alternatively, the lifetime could also be specified by other attributes provided by the HTTP protocol. Therefore, when the CDN operates according to the HTTP protocol, the synchronization can be performed by standard HTTP protocol features.

According to a further embodiment, the HTTP age header specifies the lifetime with sub-second accuracy, e.g. in milliseconds. Currently, the HTTP/1.1 protocol still specifies the lifetime in seconds. By changing the accuracy to sub-second accuracy, the time synchronization may be performed with sub-second accuracy making it usable for time critical applications such as live video streaming.

## Brief Description of the Drawings

Some example embodiments will now be described with reference to the accompanying drawings.

Fig. 1 shows an example embodiment of a streaming system for delivering live streaming to a client across a communication network;

Fig. 2 shows steps performed by a media client for streaming a live stream from a content distribution network according to an example embodiment;

Fig. 3 shows a further example embodiment of a streaming system for delivering live streaming to a client across a communication network;

Fig. 4 shows a further example embodiment of a streaming system for delivering live streaming to a client across a communication network;

Fig. 5 shows steps performed by a media client for synchronizing the client with an origin server;

Fig. 6 shows an example embodiment of a networking system for delivering objects from an origin server over a communication network to a client;

Fig. 7 shows steps performed by a client for retrieving an object from a content distribution network according to an example embodiment;

Fig. 8 shows an example embodiment of a suitable computing system for performing one or several steps in embodiments of the invention.

**Detailed Description of Embodiment(s)**

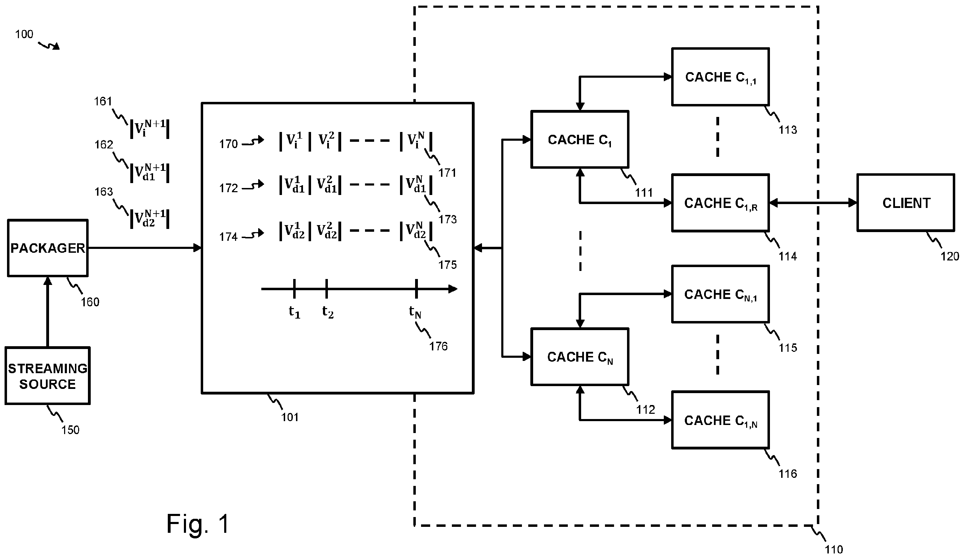

Fig. 1 shows an embodiment of a streaming system 100 for streaming a live video stream originating from a streaming source 150 to a media client 120. Streaming system 100 comprises an origin server 101 onto which the live stream is made available at a certain moment in time $t_1$. The live stream is available as a stream of video packets that can be played one after the other within the media client 120 by rendering the live stream to an end user or viewer. The live stream is made available on the origin server 101 in different versions, e.g. versions 170, 172 and 174. A single video packet is represented in Fig. 1 as $V_x^y$ wherein the subscript **x** identifies the version and the superscript **y** refers to the relative position in time within the video.

A video packet $V_x^y$ comprises at least one or more video frames. Different types of video frames are known in the art depending on whether the video frames are compressed in size by using spatial image compression and temporal motion compensation. Frames on which only spatial image compression is applied or no compression is applied are referred to as temporal independent frames, key frames, independent frames or I frames. A key frame is thus a frame that is decodable independently from other frames. Frames to which temporal motion compensation is applied, either in combination with image compression, are referred to as temporal dependent frames or, shortly dependent frames. Dependent frames are thus frames for which information of other frames is needed to decompress them. Dependent frames are sometimes further categorized in P frames and B frames. P frames can use data from previous frames to be decoded and are thus more compressible than I frames. B frames can use both previous and forward frames to decode and may therefore achieve the highest amount of data compression.

Two types of stream versions are available on origin server 101. The first type is the temporal independent version 170 or shortly independent version that comprises a sequence of temporal independent video packets 171 illustrated as $V_i^1$ to $V_i^N$ 171. A temporal independent video packet $V_i^y$ is independent from any other video packet and can thus be played on its own by media client 120. Apart from one or more video frames, an independent video packet 171 also comprises further information for initializing the video stream within the media client 120, for example information for configuring the decoder within the media client 120. As a video packet $V_i^y$ is independent, it starts with an independent frame and, optionally, has one or more subsequent dependent or independent frames. Preferably, an independent video packet $V_i^y$ contains one single frame, i.e. a single independent frame. As an independent video packet also contains information for initializing the decoder, it is further also referred to as an initialization video packet.

The second version type is the temporal dependent version 172, 174 or shortly dependent version. A dependent version of the stream comprises a sequence of video packets that may have temporal dependencies between them. In Fig. 1, two dependent versions are shown, a first version 172 having video packets $V_{d1}^1$ to $V_{d1}^N$ and a second version 174 having video packets $V_{d2}^1$ to $V_{d2}^N$. A dependent video packet may have both dependent and independent frames.

A dependent video packet $V_{dx}^y$ may also contain one single frame, i.e. a single dependent or independent frame, more preferably a dependent frame. Different dependent versions 172, 174 may offer the video stream in different bit rates, e.g. by providing the stream in a different resolution, compression or video codec. This allows the media client 120 to select a dependent version according to for example its processing capacity, display resolution and network bandwidth.

The video stream served from the origin server 101 is a live video stream, i.e. new video packets of a live stream become available on the origin server at a certain moment in time according to the video's frame rate. For example, as illustrated in Fig. 1, the first video packets $V_i^1$, $V_{d1}^1$ and $V_{d2}^1$ became available at time $t_1$; thereafter, at time $t_2$, subsequent video packets $V_i^2$, $V_{d1}^2$ and $V_{d2}^2$ became available. This continues until the current moment in time $t_N$ upon which video packets $V_i^N$, $V_{d1}^N$ and $V_{d2}^N$ become available. At that moment, the next video packets 161-163 denoted as $V_i^{N+1}$, $V_{d1}^{N+1}$ and $V_{d2}^{N+1}$ are not yet available for download, i.e. not available for retrieval by media client 120. A live stream may originate from a live source, illustrated as streaming source 150. Such a streaming source may be obtained from a live recording, e.g. from a single camera or a live production environment. The streaming source then provides the raw video stream to a packager 160 that produces the video packets 161-163 as supported by the origin server and hence, as made available for download by remote media clients. A live stream may also be produced from a pre-recorded video wherein the stream is only made available on the origin server 101 from a certain moment in time $t_1$ onwards.

When a media client 120 starts the playback of the live video stream, it first needs to retrieve at least one video packet from the independent version 170. For example, at time $t_N$, media client 120 can retrieve independent video packet $V_i^N$ 171. By this video packet, media client initializes its decoder and renders the independent frame from the video packet. Then, the media client 120 retrieves the subsequent frames from one of the dependent versions 172, 174 as they come available on the origin server 101, e.g. by retrieving video packet $V_{d1}^{N+1}$ 161 at time $t_{N+1}$, packet, $V_{d1}^{N+2}$ at time $t_{N+2}$ etc.

At least the independent video packets are available to the media client 120 upon request by a unique identifier resolving the version of the stream and the actual video packet within the stream. Consecutive video packets within a certain version may be identified by consecutive sequence numbers. For example, the first video packet $V_i^1$ has sequence number 1, packet $V_i^2$ has sequence number 2 and so on.

According to an embodiment, the communication with the origin server 101 may be performed according to the Hypertext Transfer Protocol (HTTP), i.e. by the issuance of an HTTP GET request and a corresponding HTTP response. Further, a sequence of video packets may be obtained by establishing a chunked transfer encoding session with the server 101 allowing the sequence of video packets to be streamed over a single persistent connection. Support for chunked transfer encoding was introduced in HTTP/1.1. Origin server 101 may further support a request for a sequence of video packets as a byte range request wherein the requested byte range corresponds with the range of video packets starting at the location of the first video packet of the sequence. Support for byte range requests was also introduced in HTTP/1.1 and is further specified in IETF's RFC 7233 of June 2014.

Information on the availability of the live stream in both the independent and dependent version may be provided in the form of a URL to a manifest file that is available on the origin server 101, for example a manifest file following the Common Media Application Format (CMAF) for segmented media according to ISO/IEC 23000-19.

Media client 120 retrieves video packets from origin server 101 over a communication network, e.g. a private network or the Internet. Streaming system 100 further comprises one or more caching servers 111-116 located throughout the communication network. Caching servers 111-116 and origin server 101 thereby form a content distribution network 110, CDN wherein caching servers 111-116 are configured as transparent caching proxies. To this end, caching proxies 111-116 may correspond to HTTP caching proxies as known in the art.

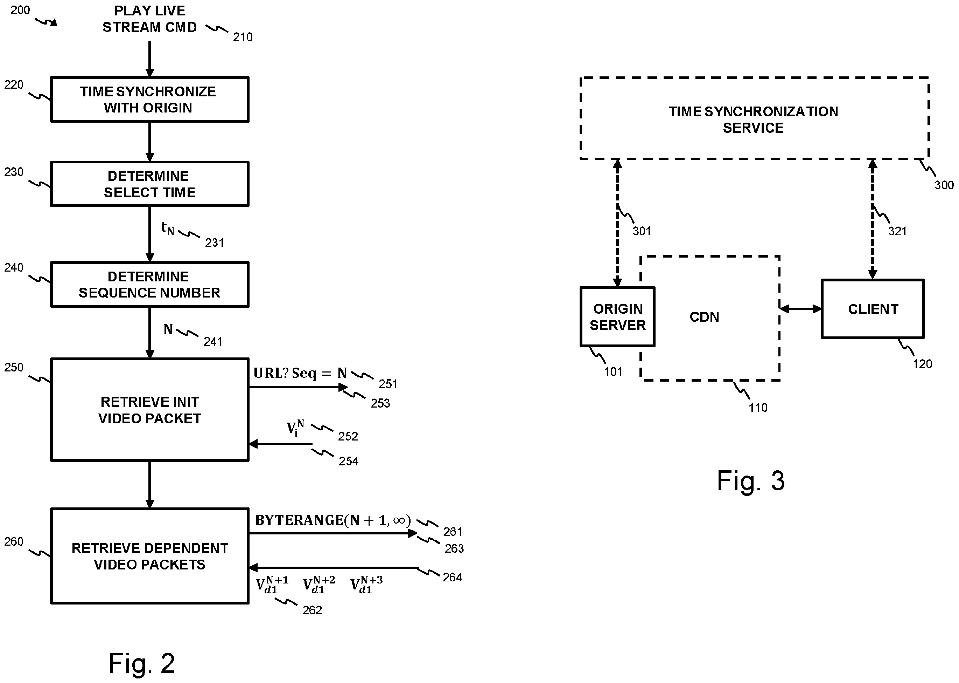

Fig. 2 illustrates steps 200 performed by the media client 120 for retrieving the live stream from CDN 110 supporting independent and dependent versions as illustrated in Fig. 1. Media client 120 may be any device or player capable of retrieving a live stream from CDN 110 and capable of decoding the received video packets into a sequence of frames that are displayed on a screen to a user. Examples of devices that are suitable as a media client are desktop and laptop computers, smartphones, tablets, setup boxes and TVs.

In a first step 210, a command to play a certain live stream from CDN 110 is received. Such command may originate from a user interaction with the media player 120, e.g. the user starting the playback of the live stream in a browser application, in a video application, from a setup box or from a television set. Upon receiving of the command 210, the media player 120 is aware of the network location of the live stream, e.g. by a URL comprising the network address of the origin server 101 and a path to the selected live stream. The media player is further aware on how to retrieve video packets from at least one independent version of the stream, e.g. version 170. The independent video packets may then be addressed by their sequence number, e.g. by a uniform resource identifier, URI, or a uniform resource locator, URL specifying the sequence number of the video packet.

As the video stream is a live stream, the media client 120 does not know the sequence number of the most recent video packet. Even if the media client 120 is aware of the starting time of the live stream, i.e. that the stream was started at time $t_1$ with video packet $V_i^1$, and determines based on the frame rate or video packet rate the sequence number of the most recent packet, then it may still happen that media client 120 identifies an earlier packet $V_i^{N-1}$ or a future packet $V_i^{N+1}$ as the most recent packet in the live stream. This mistiming may occur because the media client 120 and origin server 101 have a different internal clock and, hence, base the timing of the video packets on another time reference. In other words, the current time $t_{origin}$ on the origin server 101 does not correspond to the current time $t_{client}$ at the media client 120. To this end, media client proceeds to next step 220 wherein it performs a time synchronization with origin server 101. Such time synchronization may be performed in different ways as further described below.

When synchronized, the media client 120 has the same time reference as origin server 101. Accordingly, in step 230, a select time 231 on the origin server 101 for which a certain video packet is to be retrieved is determined. For example, the time $t_N$ at which the most recent video packet is available corresponds to $t_N = t_{origin} = t_{client}$ (231). Select time 231 may for example be expressed as the system time, i.e. a number of counts lapsed from a predetermined moment in time onwards. Alternatively, the select time may be expressed as a calendar time, i.e. in terms of year, month, day, hours, day, minutes, seconds and milliseconds.

Based on the determined select time 231 on the origin server 101, media client proceeds to step 240 wherein the video packet available at select time $t_N$ is identified by its sequence number, in this case sequence number **N** (241). The conversion between the select time $t_N$ and sequence number $Seq(t_N)$ may be based on the known starting time $t_1$ of the live stream at the origin server, the sequence number $Seq(t_1)$ at this starting time $t_1$ and the frame rate $R_V$ or video packet rate $R_V$ of the live stream as follows:

$$Seq(t_N) = Seq(t_1) + \Delta N = N$$

and

$$\Delta N = \lfloor (t_N - t_1) . R_V \rfloor$$

and wherein $\lfloor \rfloor$ performs a flooring operation to the nearest integer, $\Delta N$ is the number video packets since time $t_1$; and $R_V$ is constant. Further, $R_V$ may also vary over time. In such case $\Delta N$ can first be calculated separately for every time interval during which $R_V$ is constant and then added together.

The media client then proceeds to step 250 wherein it performs a request 253 to origin server 101 for independent video packet $V_i^N$. The request contains the unique identifier for this packet, e.g. in the form of a URL containing the sequence number **N** (251) of the video packet. This request is then forwarded along the CDN 110 until it either arrives at origin server 101 or at one of the caching servers 111-116 that has the video packet 171 cached. Thereupon a response 254 is sent from either of them containing the video packet 252 and is received by media client 120. Upon receiving response 254, media player 120 may initiate playback of the live stream by configuring the decoder with the information from the independent video packet 252 and decoding the first independent frame within the packet. Apart from the playback, media player 120 also proceeds to step 260 for further retrieval of the live stream.

In step 260, media player 120 performs a request 263 for the subsequent video packets (261) from one of the dependent versions 172, 174, i.e. for the video packets subsequent to the independent video packet 252. Again, this request is then forwarded along the CDN 110 until it either arrives at origin server 101 or at one of the caching servers 111-116 that has the subsequent dependent video packets cached. Thereupon a response 264 is sent from either of them containing a stream of the subsequent video packets 262. As the subsequent video packets only become available at the frame or packet rate, media client will receive these video packets on average at this frame or packet rate. Both the Hypertext Transfer Protocol HTTP/1.1 and Hypertext Transfer Protocol Version 2 (HTTP/2) support byte range requests and chunked transfers in different ways. Caching servers that support these protocols may thus respond to such requests.

An advantage of the steps 200 is that the media player 120 can retrieve the live stream at any moment in time without the need for a manifest file that is updated every time a new video packet becomes available. Further, as the initialization video packets are based on static unique identifiers, these packets will be efficiently cached throughout the CDN. Further, by the time synchronization the media player will not retrieve initialization video packets that are not yet available on the origin server or start the live stream to late, i.e. display the video with a large delay with respect to the time it became available on the origin server 101. Finally, media player 120 can play the live stream without considerably delay, i.e. the delay between the moment that a frame becomes available on the origin server 101 and the moment the frame is rendered to the viewer can be kept to a minimum. For example, when retrieving the most recent independent video packet as shown in step 250 this delay may be as low as the sum of the round-trip-time, RTT, in the CDN 110 and the time needed to render the independent frame from the independent video packet 152.

According to step 250, media player 120 retrieved the most recent video packet from the CDN 110. Alternatively, media player 120 may also retrieve an earlier independent video packet, e.g. one second before the current time. Then, in step 260, the dependent video packets covering this one second will be received nearly directly before falling back to the average frame or packet rate. As a result, media player 120 may fill its frame buffer to a certain level by selecting a specific time interval before the current time. This way, the buffer size can be configured with an accuracy corresponding to the video packet duration, i.e. one or a few video frames.

Fig. 3 illustrates a further embodiment for performing the time synchronization step 220. According to this embodiment, both media client 120 as well as origin server 101 establish a common time reference by interacting (301, 321) with a time synchronization service 300 according to a common time synchronization protocol. One such protocol is the Network Time Protocol which version 4 (NTPv4) is a proposed standard as documented in RFC 5905. NTPv4 is further backward compatible with version 3, specified in RFC 1305. One other protocol is the Precision Time Protocol, PTP, of which the latest version was published November 2019 as IEEE 1588-2019. By such synchronization protocol, media client 120 may time synchronize with origin server 101 to within tens of milliseconds over the Internet. In other words, the current time on the media client will resolve to $t_{origin} = t_{client} = t_N$ (231). As typical frame durations are 10ms or more, this allows identifying the most recent independent video packet sufficiently accurate on the origin server 101.

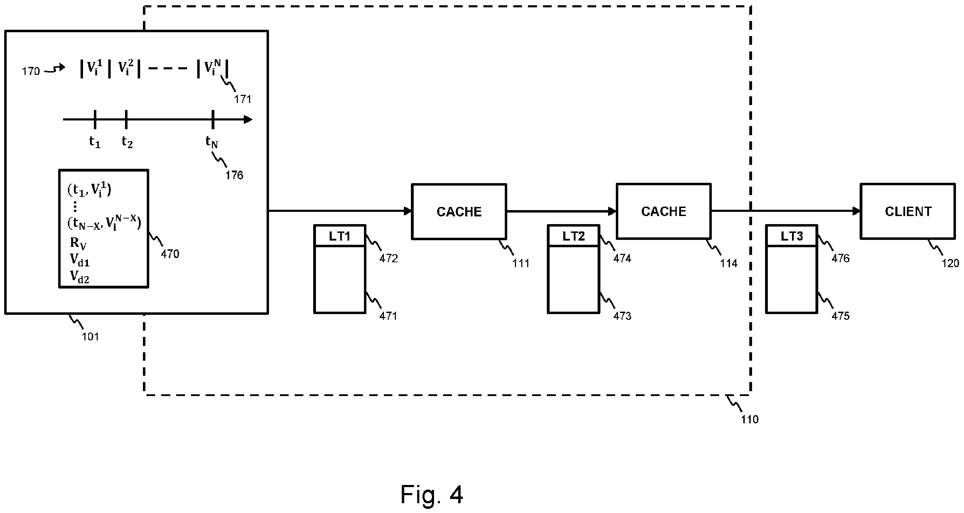

Fig. 4 illustrates how a manifest file 470 is provided by CDN 110 to media client 120 within streaming system 100 according to an example embodiment. At a certain moment in time $t_{N-X}$ origin server 101 creates or updates manifest file 470 comprising information for streaming the live stream to media client 120. Manifest file 470 for example identifies the start time $t_1$ of the live stream together with the initial sequence number at this start time $t_1$; the time $t_{N-X}$, the most recent video packet $V_i^{N-X}$; the frame or packet rate $R_V$ of the live stream, and the different independent and dependent versions $V_i$, $V_{d1}$ and $V_{d2}$ that are available. A reference in the form of a URL may be made available to the media client 120 such that it can retrieve the manifest file 470 from the CDN 110. When the manifest file 470 is retrieved from the origin server 101 by a caching server in the CDN 111, then origin server 101 provides a copy 471 of the manifest file to caching server 111 together with the lifetime 472 of the manifest file 470 since its creation at time $t_{N-X}$. Thereupon, when another caching server 114 retrieves a copy 473 of the manifest file 470 from the first caching server 111, this server 111 updates the lifetime 474 and sends it to caching server 114. At a certain moment in time, media client 120 retrieves manifest file 470 from CDN 110 from caching server 114 which provides the total lifetime 476 of the manifest file along with the manifest file itself. With the manifest file, media client 120 can stream the live stream according to the steps of Fig. 2.

Optionally, origin server may further update the manifest file 470 from time to time, for example if there is a change in the live stream. On such update, the new version of the manifest file is distributed again through the CDN according to the above described principle.

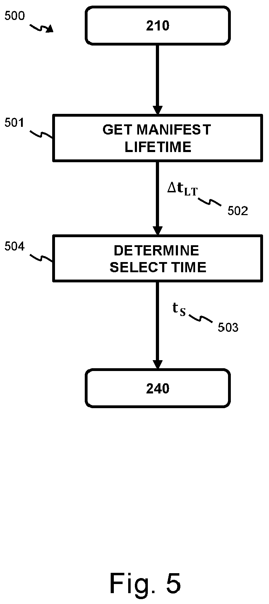

Fig. 5 illustrates a further embodiment for performing the time synchronization step 220 and the determining 230 of the select time when the streaming system 110 operates as described in Fig. 4. According to this embodiment, the time synchronization step 220 is performed based on the lifetime 476 of the manifest file 470 as retrieved from the CDN 110. More specific, the lifetime 476 provides a relative time reference to the moment $t_{N-X}$ that the manifest file 470 was created and thus the moment that the video packets of the live stream at that moment became available on the origin server 101. Upon receiving the command 210 for starting the playback of the live stream, the media player proceeds to step 501 wherein it obtains the lifetime $\Delta t_{LT}$ (502) of the manifest file 470. Based on this lifetime 502, the current time on the origin server $t_{origin}$ may be obtained as follows:

$$t_{origin} = t_{N-X} + \Delta t_{LT} + \Delta t_{NW} + \Delta t_{CL}$$

wherein $\Delta t_{LT}$ is the manifest lifetime 502, $\Delta t_{NW}$ is the network delay to transfer the manifest file from the CDN to the media client, and $\Delta t_{CL}$ is the time that the manifest resided on the media client. Further, the current time on the origin server $t_{origin}$ may be rewritten as follows:

$$t_{origin} = t_{N-X} + \Delta t_{LT} + \Delta t_{REQ} - \Delta t_{NW}$$

wherein $\Delta t_{REQ}$ is the time since the request for the manifest file was sent by the media client to the CDN, and wherein it is assumed that the network delay $\Delta t_{NW}$ is the same in both directions and that the request handling time is negligible or otherwise cancellable by further calculations. By the available parameters $\Delta t_{LT}$ and $t_{N-X}$, the media client may determine the current time on the origin server and, hence, is synchronized with origin server 101.

The media client then proceeds to step 504 wherein it determines the select time $t_S$ (503) for which the sequence number will be determined under further step 240. For example, the select time may correspond to the current time on the origin server and be determined by using the above equation:

$$t_S = t_{origin} = t_{N-X} + \Delta t_{LT} + \Delta t_{REQ} - \Delta t_{NW} = t_N$$

Alternatively, the media client may take into account the network delay for issuing the request 253 for the first video packet. When issuing the request 253 at a certain time, it will arrive a time duration $\Delta t_{NW}$ later at the CDN. During this duration $\Delta t_{NW}$ one or more new video packets will become available at the video packet rate $R_V$. Therefore, the media client can take this duration $\Delta t_{NW}$ into account when determining the select time, i.e. by:

$$t_S = t_{origin} + \Delta t_{NW} = t_{N-X} + \Delta t_{LT} + \Delta t_{REQ}$$

An advantage of this is that the network delay $\Delta t_{NW}$ disappears from the equation and only $\Delta t_{REQ}$ has to be determined by the client.

Media player 120 then proceeds to step 240 as already described with reference to Fig. 2 and determines the sequence number corresponding with the select time $t_S$.

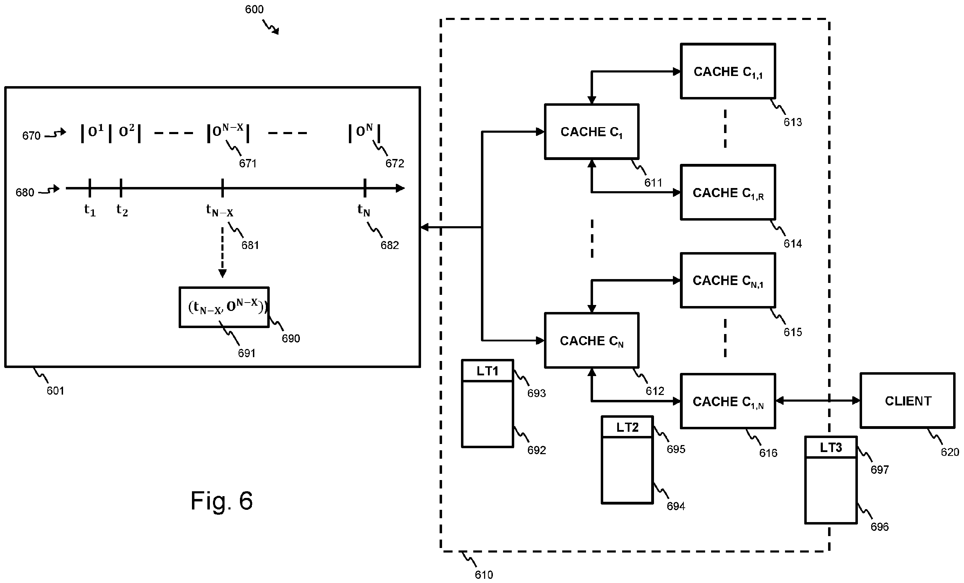

Fig. 6 shows an embodiment of a networking system 600 for providing time related objects 670 from an origin server 601 to a client 620. Networking system 600 comprises an origin server 601 onto which respective objects are made available for downloading at a certain moment in time. For example, object $O^1$ is made available at time $t_1$, object $O^{N-X}$ (671) is made available at time $t_{N-X}$ (681), and object $O^N$ (672) is made available at time $t_N$ (682). As such, objects 670 are time-relatable by the time they become available on the origin server 601. Objects 670 are addressable by respective unique time-related identifiers, i.e. an identifier which is derivable from the time on the origin server 601 at which the object became available. Such identifier may for example correspond to a sequence number and express the order in which the objects 670 became available on server 601 at regular time intervals. Such identifier may also correspond directly to a time reference, e.g. to the number of seconds or milliseconds after a certain reference time. In Fig. 6, the time on the origin server 601 is represented by timeline 680 wherein the time $t_N$ corresponds to the current time at the origin server 601 upon which object $O^N$ become available from downloading.

According to an embodiment, the communication with the origin server 601 may be performed according to the Hypertext Transfer Protocol (HTTP), i.e. by the issuance of an HTTP GET request and a corresponding HTTP response.

Information on the availability of objects 670 at a certain time may be provided in the form of a URL to another object 690, e.g. a file that is available on the origin server 601, for example a manifest file following the Common Media Application Format (CMAF) for segmented media according to ISO/IEC 23000-19.

Media client 620 retrieves objects 670 from origin server 601 over a communication network, e.g. a private network or the Internet. Networking system 600 further comprises one or more caching servers 611-616 located throughout the communication network. Caching servers 611-116 and origin server 601 thereby form a content distribution network 610, CDN, wherein caching servers 611-616 are configured as transparent caching proxies. To this end, caching proxies 611-616 may correspond to HTTP caching proxies as known in the art.

Fig. 6 further illustrates how an object 690 is provided by CDN 610 to client 620 within networking system 600 according to an example embodiment. At a certain moment in time $t_{N-X}$ origin server 601 creates or updates object 690 comprising information for identifying the object $O^{N-X}$ (671) and retrieving it by client 620. Object 690 for example identifies that object $O^{N-X}$ (671) was made available on the origin server at time $t_{N-X}$ 681. A reference in the form of a URL may be made available to the client 620 such that it can retrieve the object 690 from the CDN 610. When the object is retrieved from the origin server 601 by a caching server 612 in the CDN 610, then origin server 601 provides a copy 692 of the object to caching server 612 together with the lifetime 693 of the object 690 since its creation. Thereupon, when another caching server 616 retrieves a copy 694 of the object 690 from caching server 616, this server 612 updates the lifetime 695 and sends it to caching server 616. At a certain moment in time, client 620 retrieves object 690 from CDN 610 from caching server 616 which provides the total lifetime 697 of the object 690 along with the copy 696. Origin server 601 may further update the object 690 from time to time. On such update, the new version of the object 690 is distributed again through the CDN 610.

Such object lifetime is for example supported for requests according to the HTTP protocol in which the lifetime may be specified in the HTTP age header field. Alternatively, the lifetime could also be specified by other attributes or extensions provided by the HTTP protocol. Currently, the HTTP/1.1 protocol still specifies the lifetime in seconds, so the lifetime of the object may be determined by client 620 with an accuracy of at most 1 second. According to a further embodiment, the network system 600 may be adapted to specify the lifetime with sub-second accuracy, e.g. in milliseconds.

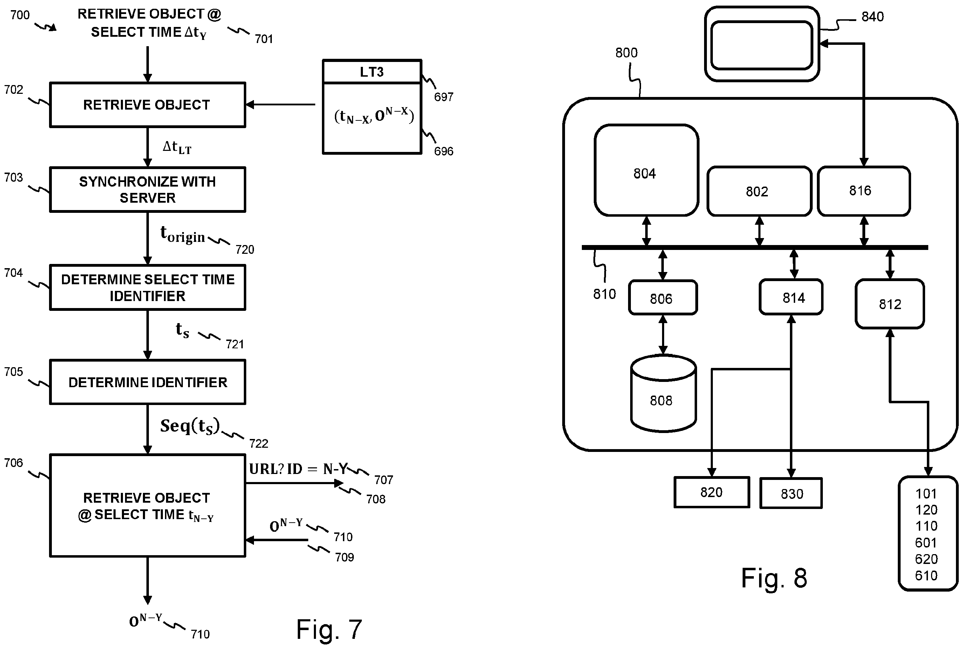

Fig. 7 illustrates steps 700 performed by client 620 for retrieving one of the objects 670 from CDN 610. The objects 670 are time-related as each object is associated with a certain moment or time interval on the origin server 601. For example, each object 670 has become available for download on the origin server 601 and thus from the CDN 610 at respective moments 680 in time. In a first step client 620 receives an instruction 701 to retrieve the object from CDN 610 associated with a certain moment in time $t_{N-Y}$, for example the most recent object or, as illustrated, the object that became available a certain time $\Delta t_Y$ ago.

Objects 670 are addressable and thus retrievable by respective unique time-related identifiers, for example by sequence numbers **1...N** wherein identifier **N** refers to the most recent object 672 associated with current time $t_N = t_{origin}$ on origin server 601. Client 620 and origin server 601 are not synchronized, i.e. the current time on the client 620 does not correspond to the current time $t_{origin}$ on the origin server 601. Because of this mismatch, when client 620 would derive the sequence number based on its own time reference, it would end up with the wrong sequence number. For example, when client 620 establishes that the current time is $t_{N-2}$, then it would wrongly identify the most recent object by sequence number **N - 2**. To this respect, client 620 proceeds to step 702 and retrieves object 690 from server 601. This object contains an explicit or implicit time reference 696, i.e. that at the time $t_{N-X}$ on the origin server the object 690 was created and then object 671 with sequence number **N - X** was the most recent object on server 601. Further, the lifetime 697 of the object 696 is also obtained by client 620, i.e. object 696 was made available on server 601 $\Delta t_{LT}$ time units ago, e.g. $\Delta t_{LT}$ seconds or milliseconds ago. Based on this information, client 620 time synchronizes with server 601 in step 703, e.g. by deriving the current time $t_{origin}$ 720 on server 601 as:

$$t_{origin} = t_{N-X} + \Delta t_{LT} + \Delta t_{NW} + \Delta t_{CL}$$

wherein $\Delta t_{LT}$ is the lifetime 697, $\Delta t_{NW}$ is the network delay to transfer the object 696 from the CDN to the client 620, and $\Delta t_{CL}$ is the time that the object 696 resided on the client 620. Further, the current time on the origin server $t_{origin}$ may be rewritten as follows:

$$t_{origin} = t_{N-X} + \Delta t_{LT} + \Delta t_{REQ} - \Delta t_{NW}$$

wherein $\Delta t_{REQ}$ is the time since the request 702 for the object 696 was sent by the client 620 to the CDN 610, and wherein it is assumed that the network delay $\Delta t_{NW}$ is the same in both directions and that the request handling time is negligible or otherwise cancellable by further calculations. By the available parameters $\Delta t_{LT}$ and $t_{N-X}$, the client 620 may determine the current time $t_{origin}$ on the origin server and, hence, is synchronized with origin server 101.

The client 620 then proceeds to step 704 wherein it determines the select time $t_S$ (721) for which the sequence number will be determined under further step 705. According to the example of Fig. 7, the select time 721 is determined as:

$$t_S = t_{origin} - \Delta t_Y = t_{N-X} + \Delta t_{LT} + \Delta t_{REQ} - \Delta t_{NW} - \Delta t_Y$$

Alternatively, the client 620 may take into account the network delay for issuing the request 708 for the object 710. When issuing the request 708 at a certain time, it will arrive a time duration $\Delta t_{NW}$ later at the CDN 610. During this duration $\Delta t_{NW}$ one or more new objects will become available at the object rate $R_O$. Therefore, the client 620 can take this duration $\Delta t_{NW}$ into account when determining the select time, i.e. by:

$$t_S = t_{origin} - \Delta t_Y + \Delta t_{NW} = t_{N-X} + \Delta t_{LT} + \Delta t_{REQ} - \Delta t_Y$$

An advantage of this is that the network delay $\Delta t_{NW}$ disappears from the equation and only $\Delta t_{REQ}$ has to be determined by the client 620.

When the unique identifier is a sequence number, then the client still needs to convert the select time 721 to unique identifier 722. This conversion may be performed in various ways, e.g. by taking into account the object rate $R_O$ at which objects 670 become available on server 601. This rate $R_O$ may be specified in object 696 or obtained in any other available manner. Based on this rate $R_O$, the sequence number $Seq(t_S)$ 722 at time $t_s$ may then be determined as:

$$Seq(t_S) = N - \lfloor \Delta t_Y . R_O \rfloor$$

Client 620 then proceeds to step 706 and retrieves object 710 by a request 708 using the determined identifier 707 and receiving response 709 with object 710.

The steps 700 describe an explicit synchronization step 703. This step may also be implicit, i.e. the lifetime 697 may be directly used in the determining step 704.

Fig. 8 shows a suitable computing system 800 for performing the steps according to the above described embodiments. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the Internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, -ROM disk, solid state drives, flash memory cards, ... could be used. Computing system 800 may be configured to perform the steps 200 500 and 700 of respectively media client 120 or client 620. Computing system 800 may also be configured as any one of origin servers 101, 601 and caching servers 111-116, 611-616.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A method for retrieving, by a media player (120), a live stream from a content distribution network (110), CDN, having an origin server (101) and at least one caching server (111-116) comprising:

   - time synchronizing (220, 501, 321) the media player with an origin server (101) of the CDN;
   - determining (230) a select time (176, 231) in the live stream;
   - deriving (240) therefrom a unique identifier (241) for a select initialization video packet (252, 171) from a temporal independent version (170) of the live stream having independent video packets (171) with respective independent frames;
   - retrieving (250), by a first request (253) comprising the unique identifier (251), the select initialization video packet (252) from the CDN; and
   - retrieving (260), by a second request (263), subsequent video packets (161 - 163, 262) from a temporal dependent version (172, 174) of the live stream having dependent video packets with respective dependent frames.

2. The method according to claim 1 wherein the unique identifier is a sequence number (241) of the independent frame (252) contained in the select initialization video packet.

3. The method according to claim 1 or 2 wherein the second request comprises a byte range request (261) starting at a byte location of the first subsequent video packet (262).

4. The method according to any one of the preceding claims wherein the time synchronizing comprises adjusting (220) an internal clock of the media player (120) by polling (321) a time synchronization server (300) according to a time synchronization protocol such as the Network Time Protocol, NTP.

5. The method according to any one of claims 1 to 3 wherein the time synchronizing (220) comprises:

   - requesting (501) a file (470) from the CDN; and
   - receiving (501) a response from the CDN with the file (475) and containing a time reference with respect to the time on the origin server (101);

   and wherein the determining (230) of the select time (503) in the live stream is further based on the received time reference (502).

6. The method according to claim 5 wherein the time reference comprises a lifetime (476) of the file in the CDN.

7. The method according to claim 5 or 6 wherein the time reference comprises a current time on the origin server (101) when the response is sent to the media player.

8. The method according to any one of claims 5 to 7 wherein the requesting (501) the file and receiving (501) the response is performed according to the HTTP protocol.

9. The method according to claim 8 wherein the response comprises an HTTP header field comprising the time reference (476).

10. The method according to claim 8 wherein the response comprises an HTTP header field comprising the time reference (476) specified with an accuracy smaller than a second.

11. The method according to any one of the preceding claims wherein the method further comprises:

    - obtaining a manifest file (470) containing information for retrieving the live stream from the CDN;

    and wherein the determining (230) of the current time and/or deriving (240) the identifier in the live stream is further based on the information in the manifest file.

12. The method according to claim 11 and any one of claims 5 to 10 wherein the file (470) corresponds to the manifest file.

**13.** A media client (120) configured for retrieving (250, 260) a live stream from a content distribution network (110), CDN, having an origin server (101) and at least one caching server (111-116), and further configured to:

- time synchronizing (220) the media player with the origin server (101) of the CDN;
- determining (230) a select time (176, 231) in the live stream;
- deriving (240) therefrom a unique identifier (241) for a select initialization video packet (252, 171) from a temporal independent version (170) of the live stream having independent video packets with respective independent frames;
- retrieving (250), by a first request (253) comprising the unique identifier (251), the select initialization video packet (252) from the CDN; and
- retrieving (260), by a second request (263), subsequent video packets (262, 162) from a temporal dependent version (172, 174) of the live stream having dependent video packets with respective dependent frames.

**14.** A computer program product comprising computer-executable instructions for causing an apparatus to perform at least the method according to any one of claims 1 to 12.

**15.** A computer readable storage medium comprising the computer program product according to claim 14.

Fig. 1

**Fig. 2**

PLAY LIVE
STREAM CMD ⟋ 210

200 ⟋

220 ⟋ TIME SYNCHRONIZE
WITH ORIGIN

230 ⟋ DETERMINE
SELECT TIME

$t_N$ ⟋ 231

240 ⟋ DETERMINE
SEQUENCE NUMBER

$N$ ⟋ 241

250 ⟋ RETRIEVE INIT
VIDEO PACKET

**URL? Seq = N** ⟋ 251
253

$V_i^N$ ⟋ 252
254

260 ⟋ RETRIEVE DEPENDENT
VIDEO PACKETS

**BYTERANGE$(N + 1, \infty)$** ⟋ 261
263

264

$V_{d1}^{N+1}$  $V_{d1}^{N+2}$  $V_{d1}^{N+3}$

262

**Fig. 3**

TIME SYNCHRONIZATION
SERVICE

300

301

321

ORIGIN
SERVER

CDN

CLIENT

101

110

120

Fig. 4

Fig. 5

Fig. 6

EP 4 017 012 A1

EP 4 017 012 A1

**700**

**RETRIEVE OBJECT @ SELECT TIME $\Delta t_Y$** 701

**LT3** 697

**702** RETRIEVE OBJECT

$(t_{N-X}, O^{N-X})$ 696

$\Delta t_{LT}$

**703** SYNCHRONIZE WITH SERVER

$t_{origin}$ 720

**704** DETERMINE SELECT TIME IDENTIFIER

$t_S$ 721

**705** DETERMINE IDENTIFIER

$Seq(t_S)$ 722

**706** RETRIEVE OBJECT @ SELECT TIME $t_{N-Y}$

**URL? ID = N-Y** 707
708

$O^{N-Y}$ 710
709

$O^{N-Y}$ 710

**Fig. 7**

**840**

**800**

804

802

816

810

806

814

812

808

820

830

101
120
110
601
620
610

**Fig. 8**

Europäisches
Patentamt

European
Patent Office

Office européen
des brevets

# EUROPEAN SEARCH REPORT

**Application Number**

EP 20 21 4381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | EP 3 515 075 A1 (THEO TECH [BE]) 24 July 2019 (2019-07-24) * paragraphs [0026], [0043] - [0046]; figure 1 * ----- | 1-15 | INV. H04N21/2187 H04N21/2343 H04N21/24 H04N21/43 H04N21/472 |
| Y | US 2014/195651 A1 (STOCKHAMMER THOMAS [DE] ET AL) 10 July 2014 (2014-07-10) * Abstract; paragraphs [0006], [0168] * ----- | 1-15 | |

TECHNICAL FIELDS
SEARCHED      (IPC)

H04N

The present search report has been drawn up for all claims

| Place of search | Date of completion of the search | Examiner |
|---|---|---|
| The Hague | 10 May 2021 | Bardella, Xavier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 21 4381

This annex lists the patent family members relating to the patent documents cited in the above-mentioned European search report.
The members are as contained in the European Patent Office EDP file on
The European Patent Office is in no way liable for these particulars which are merely given for the purpose of information.

10-05-2021

| Patent document cited in search report | | Publication date | Patent family member(s) | | Publication date |
|---|---|---|---|---|---|
| EP 3515075 | A1 | 24-07-2019 | EP | 3515075 A1 | 24-07-2019 |
| | | | KR | 20200109359 A | 22-09-2020 |
| | | | US | 2021044639 A1 | 11-02-2021 |
| | | | WO | 2019145217 A1 | 01-08-2019 |
| US 2014195651 | A1 | 10-07-2014 | CN | 104885473 A | 02-09-2015 |
| | | | CN | 109905730 A | 18-06-2019 |
| | | | DK | 2941892 T3 | 04-03-2019 |
| | | | EP | 2941892 A1 | 11-11-2015 |
| | | | ES | 2710702 T3 | 26-04-2019 |
| | | | HU | E042049 T2 | 28-06-2019 |
| | | | JP | 6321037 B2 | 09-05-2018 |
| | | | JP | 2016509400 A | 24-03-2016 |
| | | | KR | 20150105381 A | 16-09-2015 |
| | | | PL | 2941892 T3 | 31-05-2019 |
| | | | PT | 2941892 T | 18-02-2019 |
| | | | SI | 2941892 T1 | 29-03-2019 |
| | | | US | 2014195651 A1 | 10-07-2014 |
| | | | WO | 2014107580 A1 | 10-07-2014 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 3515075 A1